# EUROPEAN PATENT APPLICATION

(11) **EP 4 429 027 A1**
(43) Date of publication of application: **11.09.2024**
(21) Application number: 22888731.1
(22) Date of filing: 22.02.2022
(51) Int. Cl.: H01Q 3/32, F16H 1/16, F16H 55/22

(54) **TRANSMISSION MECHANISM AND ANTENNA**

(30) Priority: 08.11.2021 CN 202111314948
(71) Applicant: PROSE TECHNOLOGIES (SUZHOU) CO., LTD., Suzhou, Jiangsu 215345 (CN)
(72) Inventor: WANG, Xu, Suzhou, Jiangsu 215345 (CN); LI, Yongzhong, Suzhou, Jiangsu 215345 (CN); LIU, Peng, Suzhou, Jiangsu 215345 (CN); QIU, Junjie, Suzhou, Jiangsu 215345 (CN); CHEN, Qun, Suzhou, Jiangsu 215345 (CN)
(74) Representative: Isarpatent
(86) International application number: PCT/CN2022/077195
(87) International publication number: WO 2023/077690

(57) **Abstract**

The present disclosure provides a transmission mechanism, wherein the transmission mechanism comprises a driving shaft; and a stopper assembly, the stopper assembly including: a base, a surface of the base forming a first thread; and a rotating component, the rotating component being positioned on the driving shaft and can rotate with the driving shaft, and the surface of the rotating component forms a second thread matching the first thread, wherein ,at least one of the base and the rotating component is configured with a stopper; when the driving shaft rotates, the rotating component rotates with the driving shaft and slides relative to the base through an engagement of the first thread and the second thread; when the stopper resists the base or the rotating component, a relative sliding between the base and the rotating component stops. Since the stop assembly uses fewer parts and the structural fit gap is correspondingly reduced, the initial phase shift position of the phase shifter can be calibrated more accurately using this stop assembly, thereby improving the adjustment efficiency of the phase shifter.

## Description

### FIELD OF THE TECHNOLOGY

The present disclosure relates to the technical field of mobile communication antennas, and in particular to a transmission mechanism and an antenna including the transmission mechanism.

### BACKGROUND

In the technical field of mobile communications, antenna down tilt angle is a very important technical parameter. Parameters such as angle, strength, and area of mobile signal coverage will change as the down tilt angle of the antenna changes. In practical applications, it is usually necessary to adjust the antenna down tilt angle according to different situations. With the development of technology, electrically adjustable antennas with electrically adjustable down tilt angles have become more and more widely used. In an electrically adjustable antenna, multiple small phase shifters are usually arranged. These phase shifters are connected to the transmission device and are connected to multiple radiation elements through a feed network. When adjusting the electrical down tilt angle, the motor operates under the control of a control system and drives the medium panel of the phase shifter through the transmission device to drive the phase shifter to move, so that each radiation unit or combination of radiation elements obtains differential phase adjustment, thereby changing the down tilt angle of the antenna.

In order to improve the accuracy of phase adjustment, the initial phase shift position of the phase shifter needs to be calibrated. The traditional transmission device uses a combination of screws, bases, and nuts to provide the motor with a starting position of rotation (corresponding to the initial phase shift position of the phase shifter). However, since the above combination uses three parts, there is a larger structural fit gap, which causes the initial phase shift position of the phase shifter to not be accurate enough, which in turn causes errors in phase adjustment.

### SUMMARY

As mentioned above, the transmission device in the prior art uses a combination of a screw, a machine base and a nut to provide a starting position for the motor. Since the above combination uses three parts, there is a large structural fit gap. As a result, the initial phase shift position of the phase shifter is not accurate enough, causing phase adjustment errors.

To address the above technical problems, a first aspect of the present disclosure proposes a transmission mechanism. A transmission mechanism, wherein the transmission mechanism comprises: a driving shaft; and a stopper assembly, the stopper assembly including: a base, a surface of the base forming a first thread; and a rotating component, the rotating component being positioned on the driving shaft and can rotate with the driving shaft, and the surface of the rotating component forms a second thread matching the first thread, where, at least one of the base and the rotating component is configured with a stopper; when the driving shaft rotates, the rotating component rotates with the driving shaft and slides relative to the base through an engagement of the first thread and the second thread; when the stopper resists the base or the rotating component, a relative sliding between the base and the rotating component stops.

In the present disclosure, the stopper assembly includes two parts: a base and a rotating component. In comparison to the existing technology, since the stopper assembly uses fewer parts, the structural fit gap is also reduced accordingly. Therefore, using the stopper assembly can more accurately calibrate the initial phase shift position of the phase shifter, improving the accuracy of phase adjustment. At the same time, fewer parts also reduce the difficulty of assembly, reduce manufacturing costs, and have higher cost-effectiveness.

In one embodiment according to the present disclosure, the base is slidably installed, and the rotating component is fixedly installed on the driving shaft.

In one embodiment according to the present disclosure, the base is fixedly installed, and the rotating component is slidably installed on the driving shaft.

In one embodiment according to the present disclosure, the stopper is positioned on the base; when the driving shaft rotates, the rotating component slides in an axial direction of the driving shaft; when the stopper resists the rotating component, the relative sliding between the base and the rotating component stops.

In one embodiment according to the present disclosure, the stopper is any end of the first thread.

In one embodiment according to the present disclosure, the base has first mating portions respectively at both ends of the first thread, and the rotating component has second mating portions respectively at both ends of the second thread, and when the rotating component is resisted by the stopper, the first matting portion and the second mating portion contact each other.

In one embodiment according to the present disclosure, the transmission mechanism further includes: at least one driven shaft, respectively staggered with the driving shaft; and at least one direction-changing assembly respectively corresponds to one of the at least one driven shaft and is used to drive the corresponding driven shaft to rotate synchronously when the driving shaft rotates, where each direction-changing assembly includes: a worm, the worm being positioned on one of the driving shaft and the driven shaft; a first gear, positioned on the other of the driving shaft and the driven shaft; and a direction-changing mechanism meshed with the worm and the first gear.

In one embodiment according to the present disclosure, the worm is provided on the driving shaft, and the first gear is provided on the driven shaft.

In one embodiment according to the present disclosure, neither the worm nor the first gear is located on a common vertical line between the driving shaft and the driven shaft.

In one embodiment according to the present disclosure, a distance between the driving shaft and the driven shaft is smaller than a radius of the first gear.

In one embodiment according to the present disclosure, the direction-changing mechanism includes at least one second gear.

In one embodiment according to the present disclosure, a lead angle of the worm is smaller than a friction angle between the second gear and the worm.

In one embodiment according to the present disclosure, the first gear and the second gear are both helical gears.

In one embodiment according to the present disclosure, a diameter of the second gear is smaller than a diameter of the first gear.

In one embodiment according to the present disclosure, wherein a shaft of the second gear is parallel to the driven shaft, a distance between the shaft of the second gear and the driving shaft is greater than a distance between the driven shaft and the driving shaft.

In one embodiment according to the present disclosure, the direction-changing assembly further includes a position-limiting mechanism, and the position-limiting mechanism includes: a housing; and a partition wall, positioned in the housing and connected to the housing to form a position-limiting space together with the housing, in an assembled state, the worm, the direction-changing mechanism and the first gear are received in the position-limiting space.

A second aspect of the present disclosure provides an antenna. The antenna includes one embodiment according to a reflector; at least one phase shifter; and the transmission mechanism according to any embodiment of the first aspect.

A third aspect of the present disclosure provides an antenna, wherein the antenna comprises a reflector, configured with a receiving groove; at least one phase shifter; and the transmission mechanism according to any embodiment of the first aspect, the direction-changing assembly of the transmission mechanism is at least partially received in the receiving groove.

### BRIEF DESCRIPTION OF THE DRAWINGS

The embodiments are shown and elucidated with reference to the accompanying drawings. The drawings serve to illustrate the basic principles, thereby showing only those aspects necessary for an understanding of the basic principles. The drawings are not to scale. In the drawings, identical reference numbers indicate similar features.
FIG. 1 is a schematic diagram of a transmission mechanism according to an embodiment of the present disclosure, where the transmission mechanism includes a direction-changing assembly;
FIG. 2 is a schematic diagram of the position-limiting mechanism of FIG. 1 from another angle;
FIG. 3 is a schematic diagram of installing the transmission mechanism of FIG. 1 to an antenna reflector;
FIG. 4 is a partial enlargement of area B of FIG. 3;
FIG. 5 is a schematic diagram of a stopper assembly included in a transmission mechanism according to certain embodiment(s) of the present disclosure;
FIG. 6A and FIG. 6B are respectively a schematic view of the base and the rotating component in the stopper assembly of FIG. 5 from another angle;
FIG. 7 is an exploded schematic diagram of a transmission mechanism before assembly according to certain embodiment(s) of the present disclosure, where the transmission mechanism includes a direction-changing assembly and a stopper assembly; and
FIG. 8 is a schematic diagram of the transmission mechanism of FIG. 7 after it is connected to the motor and the phase shifter.

Other features, characteristics, advantages, and benefits of the present disclosure will become more apparent from the following detailed description taken in conjunction with the accompanying drawings.

### DETAILED DESCRIPTION

In the following detailed description of the preferred embodiments, reference will be made to the accompanying drawings, which form a part hereof. The accompanying drawings illustrate, by way of example, specific embodiments in which the present disclosure can be practiced. The illustrated embodiments are not intended to be exhaustive of all embodiments according to the present disclosure. It is understood that other embodiments may be utilized, and structural or logical modifications may be made without departing from the scope of the present disclosure. The following detailed description is therefore not to be taken in a limiting sense, and the scope of the present disclosure is defined by the appended claims.

Following are the technical problems in the prior art. That is, the transmission device of the electrically adjustable antenna in the prior art is often realized by using a large area of sheet metal or some complex mechanical structures, and it is difficult to make multiple sets of phase shifters to make a smooth and consistent movement, which affects the working accuracy of the phase shifter and the adjustment accuracy of the electrical down tilt angle.

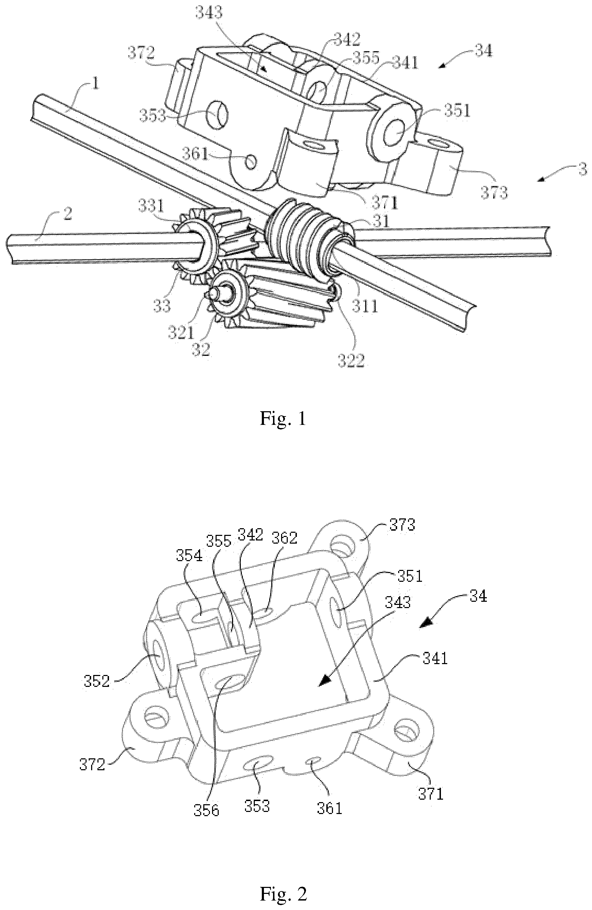

To address the above technical problems, the present disclosure proposes a transmission mechanism. Referring to FIG. 1, the transmission mechanism includes a driving shaft 1, a driven shaft 2 staggered with the driving shaft 1, and a direction-changing assembly 3. It should be understood that for the sake of simplicity, only one driven shaft 2 and one direction-changing assembly 3 are shown in FIG. 1. However, the transmission mechanism may include a plurality of driven shafts 2 and a plurality of direction-changing assemblies 3, each driven shaft is staggered with the driving shaft 1, and each direction-changing assembly 3 is connected to one of the plurality of driven shafts 2. The driving shaft 1 rotates under an action of an external driving force. The external driving force may be a driving force provided directly or indirectly by a motor, or a driving force provided directly or indirectly manually. In other words, the transmission mechanism may be used in both electrically adjustable antennas and manually adjustable antennas. When used in electrically adjustable antennas, the driving shaft 1 may be directly or indirectly connected to the motor. The direction-changing assembly 3 is used to drive the corresponding driven shaft 2 to rotate synchronously when the driving shaft 1 rotates. The direction-changing assembly 3 includes a worm 31, a direction-changing mechanism 32, and a first gear 33. As shown in FIG. 1, neither the worm 31 nor the first gear 33 is positioned on a common vertical line of the driving shaft 1 and the driven shaft 2. In other words, the worm 31 is not directly positioned above the first gear 33. The worm 31 is positioned on the driving shaft 1 and rotates with the driving shaft 1. Although in this embodiment, neither the worm 31 nor the first gear 33 is positioned on the common vertical line of the driving shaft 1 and the driven shaft 2, it can be understood that in other embodiments, one of the worm 31 and the first gear 33 can positioned on the common vertical line of the driving shaft 1 and the driven shaft 2. The direction-changing mechanism 32 is meshed with the worm 31. The first gear 33 is positioned on the driven shaft 2 and meshes with the direction-changing mechanism 32. In some embodiments, the worm 31 can also be positioned on the driven shaft 2 and the first gear 33 can be positioned on the driving shaft 1. In the embodiment of FIG. 1, the direction-changing mechanism 32 is a second gear, and both the direction-changing mechanism 32 and the first gear 33 are helical gears. However, those skilled in the art will understand that the direction-changing mechanism 32 may be a combination of multiple gears. Alternatively, the direction-changing mechanism 32 may also adopt other structures, as long as the direction-changing function may be achieved. In the embodiment of FIG. 1, the axis of the second gear 32 is parallel to the driven shaft 2, and a distance between the axis of the second gear 32 and the driving shaft 1 is greater than the distance between the driven shaft 2 and the driving shaft 1. The driven shaft 2 is connected to at least one phase shifter (not shown in FIG. 1), and then drives at least one phase shifter for synchronous phase adjustment when rotating.

In FIG. 1, the worm 31 is shown with a first central hole 311 matching the driving shaft 1. The cross-sections of the driving shaft 1 and the first central hole 311 are non-circular. For example, the cross-sections of the driving shaft 1 and the first central hole 311 are both waist shaped. The worm 31 is positioned like a sleeve over the driving shaft 1 via the first central hole 311 and is fixed circumferentially on the driving shaft 1. The first gear 33 is shown as having a second central hole 331 that matches the driven shaft 2. For example, the driven shaft 2 and the second central hole 331 both have a waist-shaped cross-section. The first gear 33 is positioned as a sleeve over the driven shaft 2 via the second central hole 331 and is fixed circumferentially on the driven shaft 2. In some embodiments, the worm 31 may be positioned on the driving shaft 1 in other forms, and the first gear 33 may also be positioned on the driven shaft 2 in other forms. For example, neither the worm 31 nor the first gear 33 has a central hole, but are integrally formed with the driving shaft 1 and the driven shaft 2 respectively.

As shown in FIG. 1, in this embodiment, the direction-changing assembly 3 also includes a position-limiting mechanism 34. The position-limiting mechanism 34 includes a housing 341 and a partition wall 342. The partition wall 342 is positioned inside of the housing 341, is connected to the housing 341, and forms a position-limiting space 343 together with the housing 341. The size of the position-limiting space 343 is designed to be in alignment with the worm 31, the direction-changing mechanism 32 and the first gear 33. In an assembled state, the worm 31, the direction-changing mechanism 32 and the first gear 33 are accommodated in the limiting space 343, thereby preventing the worm 31, the direction-changing mechanism 32 and the first gear 33 from being displaced. As illustratively shown in Figs 1 and 2, the housing 341 is provided with first and second through holes 351 and 352 that are opposite to each other and third and fourth through holes 353 and 354 that are opposite to each other. The partition wall 342 includes a first part and a second part that are perpendicular to each other. The first part and the second part are respectively provided with fifth through holes 355 and sixth through holes 356. The fifth through hole 355 is aligned with the first through hole 351 and the second through hole 352, and the sixth through hole 356 is aligned with the third through hole 353 and the fourth through hole 354. In an assembled state, the driving shaft 1 passes through the first through hole 351, the fifth through hole 355 and the second through hole 352 in sequence, and the driven shaft 2 passes through the third through hole 353, the sixth through hole 356 and the fourth through hole 354 in sequence.

Continuing to FIGs. 1 and 2, a pair of first positioning portions 361 and 362 is provided on the two side walls of the housing 341, and a pair of second positioning portions 321 and 322 is provided at both ends of the direction-changing mechanism 32. In FIGS. 1 and 2, the pair of first positioning portions 361 and 362 is shown in the form of openings, and the pair of second positioning portions 321 and 322 is shown in the form of protrusions. In an assembled state, a pair of protrusions 321 is respectively inserted into corresponding openings 361 or 362 to position the direction-changing mechanism 32. In certain embodiment(s), the first positioning portions and the second positioning portions are provided with other numbers and forms, as long as the direction-changing mechanism may be positioned by cooperating with each other.

As shown in FIGs. 1 and 2, the housing 341 is also provided with three first fixing portions 371-373 for direct or indirect fixed connection with other components of the antenna (such as a reflector). In certain embodiment(s), and as illustratively shown in FIGs. 1 and 2, each first fixing portion extends outward from an outer surface of the housing 341 and has an opening. A fixing member such as a fixing pin may be used to pass through the opening and be fixed on other components of the antenna. In certain embodiment(s), the first fixing portion may also have other numbers and forms, as long as the housing 341 may be directly or indirectly fixedly connected to other components of the antenna. Those skilled in the art should understand that the position-limiting mechanism 34 shown in FIGS. 1 and 2 is only exemplary and may have other structures. In addition, the direction-changing assembly 3 may not include the position-limiting mechanism 34, but may be limited by other means.

In certain embodiment(s), by using the direction-changing assembly to change the transmission direction of an output power of the driving shaft, the number of phase shifters may be easily increased while ensuring the synchronization and consistency of the movement of the phase shifters, and has a relatively high expandability, and the weight and cost of the transmission are also low. In addition, direction change with the help of worm drive achieves a large reduction ratio, improves the transmission accuracy, and may drive multiple phase shifters with a small driving force. Therefore, when used in electrically adjustable antennas, multiple phase shifters may be driven with a small power motor. Furthermore, the stiffness of the shaft itself further ensures consistent rotation and hence smooth movement of the phase shifters.

In certain embodiment(s), the direction-changing mechanism 32 is a second gear, and the lead angle of the worm 31 is designed to be smaller than the friction angle between the second gear and the worm 31, thereby achieving reverse self-locking and effectuate stability when the phase shifters are in operation.

In addition, the traditional transmission device uses a complex mechanical structure, so it occupies a large area and has a large thickness. With the thinning and miniaturization of antenna products, the available space inside the antenna is very limited. It is difficult for the traditional transmission device to be positioned inside it, but the transmission mechanism of the present disclosure allows the driving shaft 1 and the driven shaft 2 to be staggered through the direction-changing mechanism 32, so that the distance between the driving shaft 1 and the driven shaft 2 may be set to be smaller than a radius of the first gear 33 or the worm 31. In this way, the height of the transmission mechanism may be reduced, thereby reducing the occupied space and achieving the flattening, thinning and miniaturization of the entire antenna product.

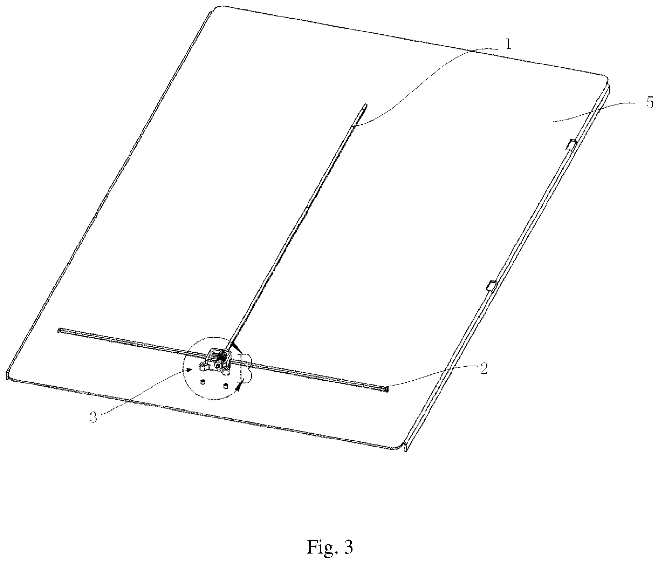

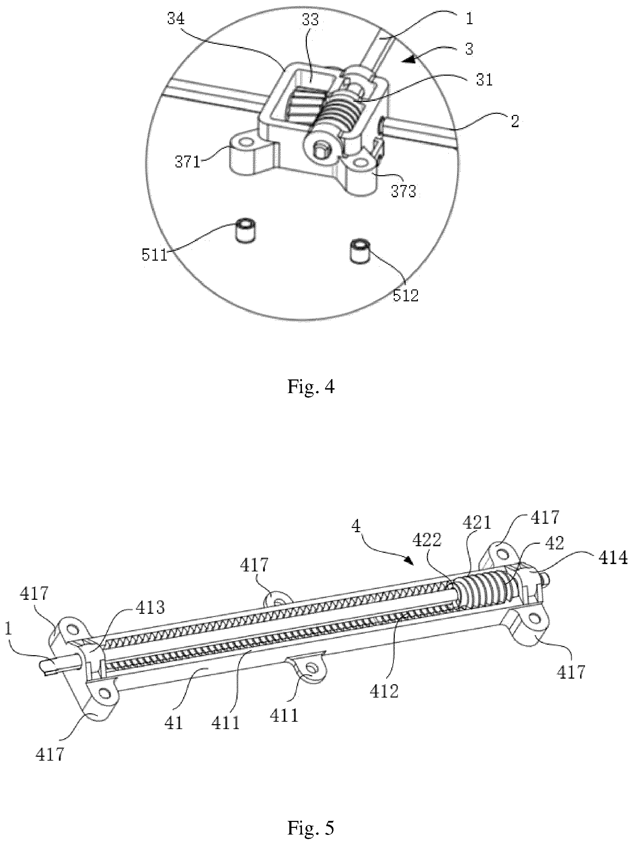

FIG. 3 shows a schematic diagram of installing the transmission mechanism of FIG. 1 on the antenna reflector, and FIG. 4 shows a partial enlarged view of area B in FIG. 3. The reflector 5 is provided with a receiving groove (not shown in FIGs. 3 and 4), the shape of which matches the shape of a projection of the direction-changing mechanism 32 on the reflector 5. When the transmission mechanism is installed on the reflector 5, a part of the direction-changing mechanism 32 is received in the receiving groove, thus reducing the thickness of the entire antenna product. In addition, the three first fixing portions 371-373 of the position-limiting mechanism 34 are respectively aligned with three fixing fitting parts on the reflector plate 5 (only two fixing fitting parts 511 and 512 are shown in the perspective of FIG. 5). Fixing elements such as pins fix the position-limiting mechanism 34 onto the reflector 5.

In the transmission device of the electrically adjustable antenna in the prior art, in addition to the above-mentioned technical problem that it is difficult for the multiple groups of phase shifters to move smoothly and uniformly, the working accuracy of the phase shifters and the adjustment accuracy of the electrical down tilt angle are affected. In addition, there is also a technical problem that the traditional transmission device uses a combination of screws, bases and nuts to provide the motor with a starting position of rotation (corresponding to the initial phase shift position of the phase shifter). However, since the above combination uses three component parts, a large structural fit gap results, which causes the initial phase shift position of the phase shifter to not be accurate enough, which in turn causes errors in the phase adjustment.

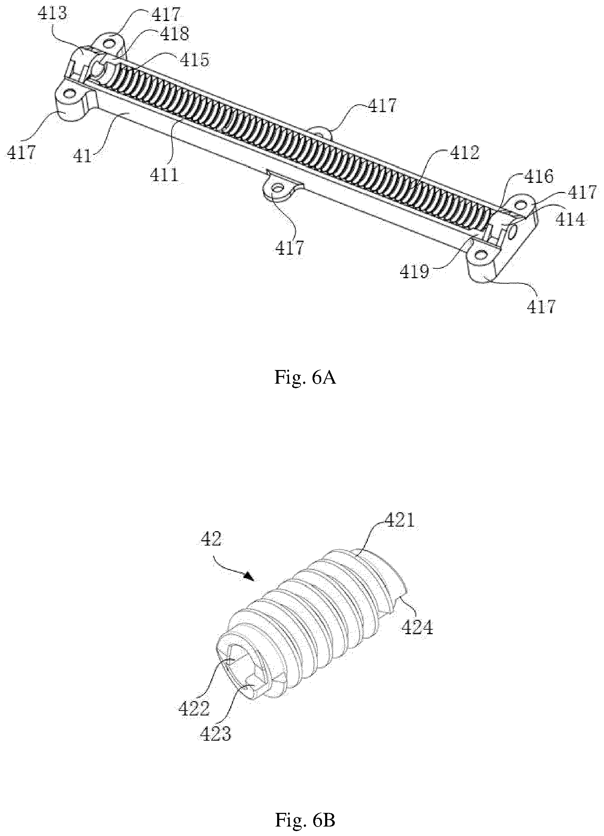

To address the above technical problems, in one embodiment of the present disclosure, the transmission mechanism also includes a stop assembly, which is used to accurately calibrate the initial phase shift position of the phase shifter. FIG. 5 shows a schematic view of the stop assembly; FIGs. 6A and 6B respectively show a schematic view of a base and a rotating component in the stop assembly of FIG. from another angle. Referring to FIGS. 5 and 6A-6B simultaneously, the stop assembly 4 includes a base 41 and a rotating component 42. A surface 411 of the base 41 forms a first thread 412. The rotating component 42 is arranged on the driving shaft 1 and rotates with the driving shaft 1. A surface of the rotating component 42 forms a second thread 421 that matches the first thread 412. When the driving shaft 1 rotates, the rotating component 42 rotates with the driving shaft 1 and slides relative to the base 41 through an engagement between the first thread 412 and the second thread 421. A stopper is provided on the base 41 and/or the rotating component 42. When the stopper resists the base 41 or the rotating component 42, the relative sliding between the base 41 and the rotating component 42 stops. In the assembled state, the position of the stopper corresponds to an initial phase-shifting position of the at least one phase shifter.

In FIG. 5, the rotating component 42 is shown in the form of a screw rod, which has a third central hole 422 that matches the driving shaft 1. For example, the cross-sections of the driving shaft 1 and the third central hole 422 are both waist shaped. The rotating component 42 is positioned on the driving shaft 1 like a sleeve via the third central hole 422 and is fixed circumferentially on the driving shaft 1. The rotating component 42 may be positioned on the driving shaft 1 in other forms. For example, the rotating component 42 does not have a central hole but is integrally formed with the driving shaft 1.

Although in FIG. 5, the surface 411 of the base 41 is recessed inwardly and forms the first thread 412, those skilled in the art will understand that the first thread 411 may be provided on the surface 411 of the base 41 in other forms. As illustratively shown in FIG. 5, the base 41 also has two opposing ends 413 and 414, and the surface 411 is positioned between the two ends 413 and 414. The two ends 413 and 414 respectively extend beyond the surface 411 and are respectively provided with through holes for the driving shaft 1 to pass through. In addition, the base 42 is also provided with six second fixing portions 417, two of which extend outward from a middle part of the base 42, and the other four second fixing portions extend from the two opposing ends 413 and 414 of the base 4,2 which are used for direct or indirect fixed connection with other components of the antenna (such as a reflector). Each second fixing portion 417 has an opening, a fixing member such as a fixing pin may pass through the opening for fixation onto other components of the antenna. In some embodiments, the second fixing portion 417 may also have other numbers and forms, as long as the base 42 may be directly or indirectly fixedly connected to other components of the antenna.

In the embodiment of FIG. 5, the stop is either end 415 or 416 of the first thread 412. The driving shaft 1 is directly or indirectly connected to the driving shaft of the motor (not shown in FIGs. 5 and 6A-6B) and rotates under the drive of the motor. When assembling the transmission mechanism and the phase shifters, the end 415 or 416 of the first thread 412 is selected as the stopper, and when the base 41 is fixed, a position of the stopper and an initial phase shift position of the phase shifter are set accordingly. At the same time, make corresponding settings in the motor control system, such as the rotation direction of the motor. In the assembled state, when the initial phase shift position needs to be calibrated, the control system controls the motor to continue to rotate in a preset rotation direction, and the driving shaft 1 rotates when driven by the motor. The base 41 is fixed on other components of the antenna (such as the reflector) via the second fixing portions 417, and therefore remains stationary. The rotating component 42 rotates with the driving shaft 1 and slides along the driving shaft 1 toward a selected end of the first thread 412. When the rotating component 42 reaches the end, the rotating component 42 stops rotating and sliding axially. This provides the motor with a starting position of rotation that indicates that the phase shifter connected to the transmission mechanism has reached the initial phase shift position. At this time, the motor control system controls the motor to rotate in an opposite direction, and driven by the motor, the driving shaft 1 also rotates in the opposite direction and begins to phase shift the phase shifter.

Although the rotating component 42 is shown in FIG. 5 as sliding along the driving shaft 1, where the base 41 is in a fixed position, in some embodiments, the rotating component 42 may be fixed to the driving shaft 1 in a circumferential and an axial direction, where the rotating component 42 does not slide along the driving shaft 1, but the base 41 is set to be able to slide along the driving shaft 1. It is operational, as long as the base 41 and the rotating component 42 are driven by the driving shaft 1 and slide relative to each other through an engagement of the first thread 412 and the second thread 421.

In addition, FIG. 5 and FIGs. 6A-6B show an example of the stopper. Those skilled in the art will understand that the stopper can be located at other positions and/or have other forms, as long as it can stop the relative sliding between the base 41 and the rotating component 42 and/or the rotation of the rotating component 42. In certain embodiment(s), the stopper is positioned at other locations on the base 41, such as any location on the first thread 412, to stop the rotation and/or sliding of the rotating component 42. In certain embodiment(s), the stopper is located on the rotating component 42. In some embodiments, both the base 41 and the rotating component 42 are each provided with a stopper, for example, two stoppers that cooperate with each other are respectively provided at appropriate locations on the base 41 and the rotating component 42. It should be understood that when assembling the transmission mechanism and the phase shifter, the position of the stopper needs to be set to correspond to the initial phase shift position of the phase shifter.

As shown in FIGs. 6A and 6B, the base 41 has a pair of first mating portions 418 and 419 respectively at two ends 415 and 416 of the first thread 412, and the rotating mechanism 42 has a pair of second mating portions 423 and 424 respectively at two ends of the second thread 421. As illustratively shown in FIG. 5 and FIGs. 6A-6B, when the rotating component 42 reaches the end 416 of the first thread 412, the first mating portion 419 and the second mating portion 424 contact each other. Similarly, if the rotating mechanism 42 slides along the driving shaft 1 toward the other end 415 of the first thread 412 and reaches the end 415, the other first mating portion 418 and the other second mating portion 423 contact each other.

In the above embodiment, the stop assembly includes two parts: a base and a rotating component. Compared with the existing technology, since the stop assembly uses fewer parts and the structural fit gap is correspondingly reduced, the initial phase shift position of the phase shifter can be calibrated more accurately using this stop assembly, thereby improving the adjustment efficiency of the phase shifter. At the same time, fewer parts also reduce the difficulty of assembly, reduce manufacturing costs, and have higher cost-effectiveness.

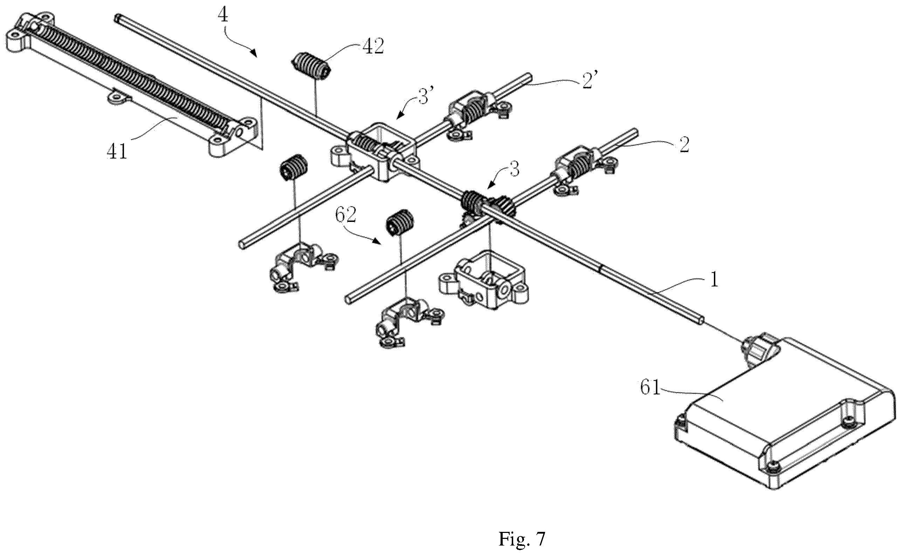

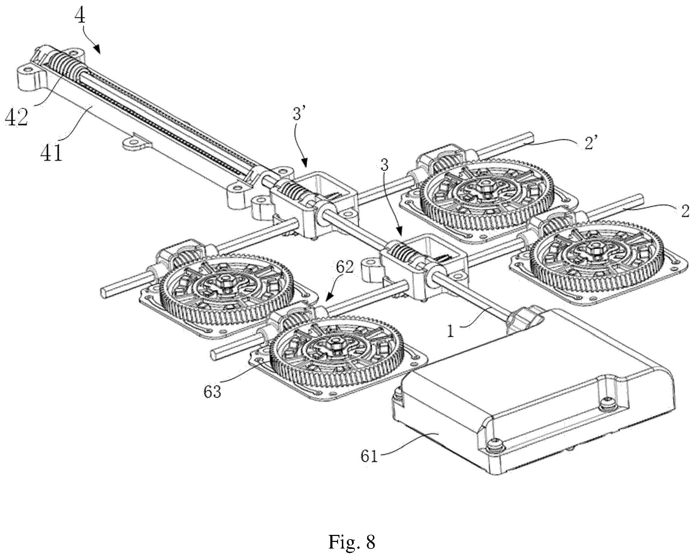

Refer next to FIG. 7 and FIG. 8. FIG. 7 shows an exploded schematic view of the transmission mechanism before assembly according to certain embodiment(s) of the present disclosure. The transmission mechanism includes a direction-changing assembly and a stopper assembly. FIG. 8 illustratively shows a schematic diagram of the transmission mechanism of FIG. 7 after connection to a motor and a phase shifter. In certain embodiment(s), the transmission mechanism includes two driven shafts 2 and 2' and two direction-changing assemblies 3 and 3'. The driving shaft 1 is connected to a driving shaft of the motor 61 and rotates through a drive by the motor 61. The two driven shafts 2 and 2' are staggered with the driving shaft 1 respectively. The two direction-changing assemblies 3 and 3' respectively convert the rotation of the driving shaft 1 into the rotation of the driven shafts 2 and 2'. It should be understood that the driving shaft 1 does not have to be directly connected to the driving shaft of the motor 61, it can be driven by the motor 61 indirectly. For example, the direction-changing assembly 3 is used to convert the rotation of the driving shaft of the motor 61 into the rotation of the driving shaft 1.

In this embodiment, the transmission mechanism also includes a stopper assembly 4 shown in FIG. 5, but those skilled in the art will understand that the purpose of the direction-changing assembly 3 is to solve the problem that it is difficult for the traditional transmission structure to make the phase shifter move smoothly and consistently, and thus to affect the working accuracy of the phase shifter and the adjustment accuracy of the electrical down tilt angle. The purpose of the stopper assembly 4 is to solve the technical problem that the traditional stopper structure has a large structural fit gap, which causes the initial phase shift position of the phase shifter to be inaccurate. Therefore, the transmission mechanism does not have to have the direction-changing assembly 3 and the stopper assembly 4 at the same time, and they can be used in different transmission mechanisms respectively. However, the transmission mechanism having both the direction-changing assembly 3 and the stopper assembly 4 can solve the above two technical problems at the same time.

As shown in FIG. 7 and FIG. 8, two drive assemblies 62 are positioned symmetrically on each driven shaft relative to the direction-changing assembly 3, and each drive assembly 62 is used to drive a shift movement of phase shifters 63 through the rotation of the driven shaft. Specifically, each drive assembly 62 includes a worm circumferentially fixed on the driven shaft and a fixing mechanism for defining the position of the worm. The fixing mechanism is fixed on other components of the antenna (such as a reflector) via fixing pieces. The worm of the drive assembly 62 meshes with an external gear of a phase shifter 63. When the driven shaft rotates, the worm of the drive assembly 62 rotates accordingly, thereby driving the external gear of the phase shifter 63 to rotate, thereby performing phase adjustment. Those skilled in the art can understand that the structure of the drive assembly 62 is not limited to the form shown in FIGs. 7 and 8, as long as it can drive the phase shifter 63 to perform phase shifting driven by the driven shaft 2 or 2'.

In this embodiment, one end of the first thread on the base 41 is used as a stopper to stop the rotating assembly 42. Through pre-arrangement, the position of the end corresponds to the initial phase-shifting position of the plurality of phase shifters 63 (that is, the working starting position of the motor). When it is necessary to calibrate the initial phase shift position of the phase shifter, under the control of the control system, the motor 61 drives the driving shaft 1 to continuously rotate, so that the rotating component 42 rotates with the driving shaft 1 and moves along the driving shaft 1 toward the end (as a stopper) of the first thread. At the same time, the rotation of the driving shaft 1 is transmitted to the driven shafts 2 and 2' via the direction-changing assemblies 3 and 3', and driven by the multiple drive assemblies 62, the multiple phase shifters move toward their initial phase shifting positions. When the rotating part 42 reaches the end, the rotating part 42 cannot continue to rotate and slide, and the second mating portion thereon abuts against the first mating portion at the end. At this time, the plurality of phase shifters 63 are located at their initial phase shifting positions, the control system controls the motor 61 to reverse rotate, and the plurality of phase shifters 63 begin to shift phase. Since the stopper assembly uses fewer parts, the structural fit gap is also reduced accordingly. Therefore, using the stopper assembly can more accurately calibrate the initial phase shift position of the phase shifter, improving the accuracy of phase adjustment. At the same time, fewer parts also reduce the difficulty of assembly, reduce manufacturing costs, and have higher cost-effectiveness.

During the phase shifting process, the motor 61 determines the number of rotation turns through the control signal sent by the control system, and the number of rotation turns corresponds to the phase to be adjusted by the phase shifter 63. The driving shaft 1 rotates under the drive of the motor 61, and the direction-changing assemblies 3 and 3' convert the rotation of the driving shaft 1 into the rotation of the two driven shafts 2 and 2'. Driven by multiple drive assemblies 62, multiple phase shifters 63 perform synchronous phase adjustment. At the same time, the rotating component 42 rotates with the driving shaft 1 and slides along the driving shaft 1. Since the first thread on the base 41 has sufficient length, during the phase shifting process, the rotating component 42 will not reach the end of the first thread and be stopped. The direction-change effectuated with the help of worm drive achieves a large reduction ratio, improves the transmission accuracy and can drive multiple phase shifters with a small driving force. Furthermore, the stiffness of the shaft itself further ensures consistent rotation and therefore smooth phase shifter movement.

For the sake of simplicity, only four phase shifters are shown in the embodiments of FIGs. 7 and 8, but those skilled in the art will understand that in an antenna product, especially a MIMO antenna, there are usually several phase shifters (such as 16, 32, 64, or the like) phase shifters and radiation elements. Therefore, more phase shifters can be provided on the driven shafts 2 and 2' as needed, or several more driven shafts 2 and 2' and corresponding direction-changing assemblies 3 can be added. Multiple phase shifters may be configured on the driven shaft. The specific arrangement of the phase shifter 63 on the driven shaft (such as being symmetrical with respect to the direction-changing assembly 3 or being located at one side of the direction-changing assembly 3) may also be determined according to needs (such as the size of the space within the antenna). It should also be understood that multiple third shafts and corresponding multiple direction-changing assemblies may be staggered on each driven shaft, and the rotation of the driven shaft is converted into the rotation of the third shaft through the direction-changing assembly, thereby driving multiple phase shifters that are connected to the driving shaft, driven shaft and/or third shaft to perform synchronous phase adjustment. Therefore, using this transmission mechanism may easily increase the number of phase shifters, has good scalability, and the weight and cost of the transmission are also low.

In the embodiment of FIGs. 7 and 8, the stopper assembly 4 is provided at the rear end of the driving shaft 1, but those skilled in the art will understand that the position of the stopper assembly 4 may be set as needed, for example, the stopper assembly 4 is arranged at the front of the driving shaft 1 (such as between the driven shaft 2 and the motor 61) or in the middle of the driving shaft 1 (such as between the two driven shafts 2 and 2').

In addition, the present disclosure also proposes an antenna, including: a reflector plate; at least one phase shifter; and a transmission mechanism according to any one of the above embodiments. In certain embodiment(s), a receiving groove is provided on the reflector plate, and a portion of the direction-changing mechanism 32 is received within the receiving groove, thereby reducing the height of the transmission mechanism. Receiving grooves may be provided as needed. For example, when the diameter of the direction-changing mechanism 32 (such as the second gear) is greater than or equal to the diameter of the first gear 33, a receiving groove must be provided to shorten the distance between the driven shaft 2 and the reflector plate, thereby reducing the thickness of the antenna assembly. And when the diameter of the direction-changing mechanism 32 is smaller than the diameter of the first gear 33, the receiving groove may not be provided. In an ideal situation, the distance between the driving shaft 1 and the driven shaft 2 is close to zero, that is, as long as there is no friction between the driving shaft 1 and the driven shaft 2. In some embodiments, a portion of the direction-changing mechanism 32 and a portion of the first gear 33 can be received in the receiving groove, thereby further shortening the distance between the driven shaft 2 and the reflector plate. Under ideal circumstances, the distance between the driven shaft 2 and the reflector plate is close to zero.

Although various exemplary embodiments of the present disclosure have been described, it will be apparent to those skilled in the art that various changes and modifications can be made without departing from the spirit and scope of the present disclosure, to achieve one or some of the advantages of the present disclosure. Other components performing the same function may be appropriately substituted by those skilled in the art. It will be understood that features explained here with reference to a particular figure may be combined with features of other figures, even in those cases where this is not explicitly mentioned. Such modifications of the solution according to the present disclosure are intended to be covered by the appended claims.

## Claims

1. A transmission mechanism, wherein the transmission mechanism comprises:
a driving shaft; and
a stopper assembly, the stopper assembly including:
a base, a surface of the base forming a first thread; and
a rotating component, the rotating component being positioned on the driving shaft and being capable of rotating with the driving shaft, and the surface of the rotating component forming a second thread matching the first thread, wherein,
at least one of the base and the rotating component is configured with a stopper;
when the driving shaft rotates, the rotating component rotates with the driving shaft and slides relative to the base through an engagement of the first thread and the second thread; and when the stopper resists the base or the rotating component, a relative sliding between the base and the rotating component stops.

2. The transmission mechanism of claim 1, wherein the base is slidably installed, and the rotating component is fixedly installed on the driving shaft.

3. The transmission mechanism of claim 1, wherein the base is fixedly installed, and the rotating component is slidably installed on the driving shaft.

4. The transmission mechanism of claim 1, wherein the stopper is positioned on the base; when the driving shaft rotates, the rotating component slides in an axial direction of the driving shaft; when the stopper resists the rotating component, the relative sliding between the base and the rotating component stops.

5. The transmission mechanism of claim 4, wherein the stopper is any end of the first thread.

6. The transmission mechanism of claim 4, wherein the base has first mating portions respectively at both ends of the first thread, and the rotating component has second mating portions respectively at both ends of the second thread, and when the rotating component is resisted by the stopper, the first matting portion and the second mating portion contact each other.

7. The transmission mechanism of claim 1, wherein the transmission mechanism further comprises:
at least one driven shaft, respectively staggered with the driving shaft; and
at least one direction-changing assembly respectively corresponding to one of the at least one driven shaft and being used to drive the corresponding driven shaft to rotate synchronously when the driving shaft rotates, wherein each direction-changing assembly includes:
a worm, the worm being positioned on one of the driving shafts and the driven shaft;
a first gear, positioned on the other of the driving shaft and the driven shaft; and
a direction-changing mechanism meshed with the worm and the first gear.

8. The transmission mechanism of claim 7, wherein the worm is provided on the driving shaft, and the first gear is provided on the driven shaft.

9. The transmission mechanism of claim 7, wherein neither the worm nor the first gear is located on a common vertical line between the driving shaft and the driven shaft.

10. The transmission mechanism of claim 9, wherein a distance between the driving shaft and the driven shaft is smaller than a radius of the first gear.

11. The transmission mechanism of claim 7, wherein the direction-changing mechanism includes at least one second gear.

12. The transmission mechanism of claim 11, wherein a lead angle of the worm is smaller than a friction angle between the second gear and the worm.

13. The transmission mechanism of claim 11, wherein the first gear and the second gear are both helical gears.

14. The transmission mechanism of claim 11, wherein a diameter of the second gear is smaller than a diameter of the first gear.

15. The transmission mechanism of claim 11, wherein a shaft of the second gear is parallel to the driven shaft, wherein a distance between the shaft of the second gear and the driving shaft is greater than a distance between the driven shaft and the driving shaft.

16. The transmission mechanism of claim 7, wherein each direction-changing assembly further includes a position-limiting mechanism, and the position-limiting mechanism includes:
a housing; and
a partition wall, positioned in the housing and connected to the housing to form a position-limiting space together with the housing, in an assembled state, the worm, the direction-changing mechanism and the first gear are received in the position-limiting space.

17. An antenna, wherein the antenna comprises:
a reflector;
at least one phase shifter; and
the transmission mechanism of any one of claims 1-16.

18. An antenna, wherein the antenna comprises:
a reflector, configured with a receiving groove;
at least one phase shifter; and
the transmission mechanism according to any one of claims 7-16, wherein the direction-changing assembly of the transmission mechanism is at least partially received in the receiving groove.
